# FASCICULE DE BREVET EUROPEEN

(11) **EP 4 065 350 B1**
(45) Date de publication et mention de la délivrance du brevet: **13.08.2025**
(21) Numéro de dépôt: 20820517.9
(22) Date de dépôt: 25.11.2020
(51) Int. Cl.: B29C 65/20, B29C 65/32, B29C 65/82, B29C 65/72, B29C 65/08, B29C 65/10, B29C 65/14, B29C 65/16, B29C 65/24, B29C 65/26, B29C 65/30, B29K 101/12, B29K 105/06, B29K 71/00, B29K 81/00

(54) **PROCÉDÉ D'ÉVALUATION D'UN ASSEMBLAGE PAR SOUDAGE DE PIÈCES À BASE DE MATÉRIAUX THERMOPLASTIQUES**
VERFAHREN ZUR BEWERTUNG EINER ANORDNUNG DURCH SCHWEISSEN VON TEILEN AUS THERMOPLASTISCHEN KUNSTSTOFFEN
METHOD FOR EVALUATING AN ASSEMBLY BY WELDING OF PARTS MADE OF THERMOPLASTIC MATERIALS

(30) Priorité: 27.11.2019 FR 1913344
(43) Date de publication de la demande: 05.10.2022
(73) Titulaire: ARKEMA FRANCE, 92800 Puteaux (FR); Institut de Soudure, 93420 Villepinte (FR)
(72) Inventeur: PHILIPPE, Aurélien, 57940 Volstroff (FR); KLEIN, Philippe, 57520 Rouhling (FR); GLOTIN, Michel, 92210 Saint Cloud (FR)
(74) Mandataire: Bandpay & Greuter
(86) Numéro de dépôt international: PCT/FR2020/052175
(87) Numéro de publication internationale: WO 2021/105614

(56) Documents cités:
- EP-A1- 2 801 472
- WO-A1-2020/016514
- US-A1- 2014 124 125
- MISUGI HONGOH ET AL: "Temperature Rise and Welding Characteristics of Various-Frequency Ultrasonic Plastic Welding Systems", JAPANESE JOURNAL OF APPLIED PHYSICS, vol. 45, no. 5B, 1 May 2006 (2006-05-01), JP, pages 4806 - 4811, XP055344927, ISSN: 0021-4922, DOI: 10.1143/JJAP.45.4806

## Description

### Domaine technique

La présente invention concerne un procédé d'évaluation d'un assemblage par soudage de pièces à base de matériaux thermoplastiques, une éprouvette et ses utilisations associées et le système de soudage associé.

### Arrière-plan technique

Les pièces à base de matériaux thermoplastiques ont de nombreuses applications, notamment dans le domaine de l'aéronautique pour la fabrication de pièces de peau de fuselage, de cadres ou de lisses d'avion. Alternativement, ces pièces peuvent être des pièces d'équipements spatiaux, ou automobiles, ou d'équipements sportifs.

Ces pièces peuvent comprendre des fibres de renfort, par exemple des fibres de carbone et/ou des fibres de verre, dispersées dans une matrice polymère thermoplastique. Ces pièces à base de matériaux thermoplastiques sont couramment dénommées pièces composites ou pièces en matériaux composites.

Pour certaines applications, il peut être nécessaire d'associer plusieurs pièces composites comme, par exemple, dans le cas du fuselage d'avion, un panneau de peau, des raidisseurs et des cadres.

Divers procédés d'assemblage par soudage (également dénommés procédés de soudage ou procédés de fabrication) par chauffe de pièces à base de matériaux thermoplastiques sont connus. On distingue les procédés de soudage statiques des procédés de soudage dynamiques, dans lesquels l'élément de chauffe se déplace par rapport aux pièces à souder. Par exemple, le soudage des pièces peut être mis en œuvre par chauffe directe ou indirecte des pièces. Des technologies basées sur la chauffe d'un insert (ou suscepteur) préalablement déposé au niveau de l'interface des pièces à souder existent notamment. Les pièces peuvent être soudées par application de différents types de sources de chaleur. Par exemple, la source de chaleur peut être obtenue par induction, par effet résistif, par vibration, par frottement, par ultrasons, par utilisation d'un laser, par flux de gaz chaud ou par conduction à partir d'une source externe de chaleur.

A titre d'exemple, la demande PCT/FR2019/051775 déposée le 16 juillet 2019 (non-publiée) décrit notamment un procédé de soudage d'au moins deux pièces rigides comprenant un matériau thermoplastique et ayant des surfaces à souder respectives, comprenant : l'insertion d'un insert entre les surfaces à souder des deux pièces ; la fourniture de chaleur par ledit insert ; dans lequel l'insert se déplace par rapport aux pièces à souder lors du soudage, selon une direction de soudage D.

Suivant le procédé de soudage mis en œuvre et/ou le type des pièces à souder, la qualité du joint de soudure doit être évalué, et le paramétrage du soudage optimisé, afin de déterminer si les propriétés de soudage sont satisfaisantes, notamment en termes de performance, d'efficacité, de rapidité, d'intégrité et d'homogénéité. En effet, la mise en œuvre de tels procédés à l'échelle industrielle et sur des pièces de grande taille peut avoir un impact sur la fiabilité et la répétabilité de la qualité du joint de soudure, et impose une maîtrise satisfaisante de la chauffe des pièces à souder. L'optimisation du paramétrage du soudage limite également les désavantages de certains procédés d'assemblage par soudage, notamment la déformation, le décompactage et/ou la délamination des pièces soudées, le manque d'homogénéité du joint de soudure, etc.

Le brevet US 5,902,935 publié le 11 mai 1999 décrit notamment un procédé non-destructif d'évaluation de la qualité du soudage de pièces à base de matériaux thermoplastiques par utilisation d'impulsions électromagnétiques pour induire des vibrations dans l'insert et par analyse d'un signal acoustique obtenu.

Des technologies de soudage sont également divulguées dans les documents suivants : la demande américaine US 2014/0124125 A1 publiée le 8 mai 2014, la demande européenne EP 2801472 A1 publiée le 12 novembre 2014 et l'article de M. Hongoh et al., Japanese Journal of Applied Physics, Vol.45, No.5B, 2006, pp.4806-4811.

Il existe donc un réel besoin de fournir un procédé d'évaluation de l'assemblage par soudage de pièces à base de matériaux thermoplastiques ; en particulier la performance, l'efficacité, la rapidité, l'intégrité et/ou l'homogénéité du soudage.

Il existe également un réel besoin de fournir un procédé d'évaluation du profil thermique de pièces à base de matériaux thermoplastiques lors de leur assemblage par soudage.

Il existe également un réel besoin de fournir un procédé d'étalonnage du paramétrage de soudage de pièces à base de matériaux thermoplastiques.

Il existe également un réel besoin de fournir un procédé de qualification d'un assemblage par soudage de pièces à base de matériaux thermoplastiques, notamment dans le domaine de l'aéronautique.

Il existe également un réel besoin de fournir un procédé de surveillance d'un assemblage par soudage, notamment des moyens et matériels utilisés, au fur et à mesure d'une production.

### Résumé de l'invention

L'invention concerne en premier lieu un procédé d'évaluation d'un assemblage par soudage de pièces à base de matériaux thermoplastiques et ayant des surfaces à souder et des surfaces libres respectives comprenant:
- 1- la fourniture d'une éprouvette comprenant au moins deux pièces se chevauchant au moins en partie ;

au moins une des pièces étant une pièce perforée de référence comprenant au moins une perforation dans son épaisseur ;
   - 2- la fourniture d'une installation de soudage comprenant au moins un élément de chauffe et au moins un capteur de température ;
   - 3- la fourniture de chaleur par l'élément de chauffe ;
   - 4- la mesure d'au moins une température interne de l'éprouvette par le capteur de température au niveau de la perforation;
dans lequel l'élément de chauffe et le capteur de température se déplacent par rapport aux pièces à souder lors du soudage, selon une direction de soudage D.

Dans un mode de réalisation, l'élément de chauffe est un insert, ledit insert étant inséré entre les surfaces à souder des deux pièces à souder.

Dans un mode de réalisation, ledit insert est chauffé par induction, par effet résistif, par vibration, par frottement, par ultrasons ou par utilisation d'un laser par un flux de gaz chaud ou par conduction à partir d'une source externe de chaleur ; préférentiellement par induction ou par effet résistif ; très préférentiellement par induction ou alternativement par effet résistif.

Dans un mode de réalisation, la perforation est une perforation traversant en tout ou partie l'épaisseur de la pièce perforée de référence.

Dans un mode de réalisation, la perforation est une perforation de section carrée, de section rectangulaire ou de section circulaire ; préférentiellement de section circulaire.

Dans un mode de réalisation, la pièce perforée de référence comprend au moins deux perforations alignées perpendiculairement et/ou au moins deux perforations alignées parallèlement à la direction de soudage D.

Dans un mode de réalisation, la pièce perforée de référence comprend au moins une première section perforée, une deuxième section non perforée et une troisième section perforée ; les sections perforées comprenant respectivement au moins une perforation et encadrant la section non-perforée.

Dans un mode de réalisation, le procédé comprenant en outre la mesure d'au moins une température de la surface libre de la pièce perforée de référence (température de surface).

Dans un mode de réalisation, la température de surface et la température interne sont mesurées transversalement et/ou longitudinalement, par rapport à la direction de soudage D.

Dans un mode de réalisation, le procédé comprend en outre l'enregistrement des valeurs de températures.

Dans un mode de réalisation, le procédé comprend en outre la comparaison des températures mesurées avec des températures de référence.

Dans un mode de réalisation, le procédé comprend en outre une étape de calibration des paramètres du procédé d'assemblage par soudage.

L'invention concerne en deuxième lieu un procédé d'assemblage par soudage d'au moins une série de pièces à base de matériaux thermoplastiques à souder et ayant des surfaces à souder et des surfaces libres respectives comprenant :
- 1- la détermination du paramétrage de soudage desdites pièces à souder, à partir de l'évaluation de l'assemblage par soudage d'une éprouvette formant un échantillon représentatif selon le procédé d'évaluation décrit ci-contre; et
- 2- la mise en œuvre de l'assemblage par soudage desdites pièces à souder.

L'invention concerne en troisième lieu une éprouvette pour la mise en œuvre du procédé d'évaluation d'un assemblage par soudage de pièces à base de matériaux thermoplastiques tel que décrit ci-contre, ladite éprouvette comprenant au moins deux pièces à base de matériaux thermoplastiques ayant des surfaces à souder placées au moins en partie en vis-à-vis l'une de l'autre et des surfaces libres respectives, au moins une des pièces étant une pièce perforée de référence comprenant au moins une perforation.

L'invention concerne en quatrième lieu l'utilisation de l'éprouvette telle que décrite ci-contre pour l'évaluation d'un assemblage par soudage de pièces à base de matériaux thermoplastiques à souder, l'éprouvette étant un échantillon représentatif desdites pièces ; préférentiellement pour la comparaison par rapport à une référence, pour le calibrage d'au moins un paramètre de soudage, pour l'étalonnage d'au moins un paramètre de soudage et/ou pour la surveillance d'un procédé d'assemblage par soudage.

L'invention concerne en cinquième lieu un système de soudage pour la mise en œuvre de l'évaluation d'un assemblage par soudage comprenant une éprouvette et une installation de soudage, telles que décrites ci-contre.

### Brève description des figures

La figure 1 représente une vue en perspective schématique d'une installation de soudage 1 pouvant être adaptée pour la mise en œuvre du procédé selon l'invention
La figure 2 représente une vue en perspective d'une pièce perforée de référence 20.
La figure 3 représente une vue en perspective d'une pièce perforée de référence 30.
La figure 4 représente une vue en perspective d'une éprouvette comprenant une pièce perforée de référence 30 et une pièce non-perforée de référence 40, selon la présente invention.
La figure 5 représente une vue en perspective d'une première section perforée d'une pièce perforée de référence 50.
La figure 6 représente une vue en perspective d'une portion d'une éprouvette correspondant à la première section perforée d'une pièce perforée de référence 50 et à la section correspondante de la deuxième pièce de référence 60.
La figure 7 représente une vue en coupe transversale d'une éprouvette au niveau d'un alignement de perforations d'une pièce perforée de référence 50 et de la deuxième pièce de référence 60 correspondante.
La figure 8 est une image de températures de surface et d'interface d'une éprouvette obtenue par caméra thermique au niveau de la zone intermédiaire.
La figure 9 est une représentation graphique des températures de surface et d'interface d'une éprouvette en fonction de temps, mesurée par une caméra thermique au niveau de la zone intermédiaire lors de l'assemblage par soudage selon le procédé selon l'invention.
La figure 10 est une représentation graphique des températures de chauffe, de soudure et de surface d'une éprouvette en fonction du paramétrage de consigne, mesurée par une caméra thermique au niveau de la zone intermédiaire lors de l'assemblage par soudage selon le procédé selon l'invention.

### Description détaillée

L'invention est maintenant décrite plus en détail et de façon non limitative dans la description qui suit.

### Définitions

On entend par « pièce rigide » une pièce qui ne se déforme pas ou se déforme peu sous son propre poids. La rigidité de la pièce peut être caractérisée par un test de déformation d'une éprouvette de la pièce à souder. L'éprouvette utilisée dans le test de déformation est à distinguer de l'éprouvette selon la présente invention. Le test de déformation consiste en la préparation d'une éprouvette découpée dans la portion de la pièce à tester ayant l'épaisseur la plus faible (si épaisseur variable), ladite éprouvette ayant une longueur de 12 cm, une largeur de 1 cm. La rigidité est appréciée en posant et en centrant l'éprouvette sur deux appuis distants de 10 cm. Dans les conditions standards de température (18 °C) et de pression (1,013.10⁻³ Pa), l'éprouvette présente une flèche maximale en son centre de 1 cm, correspondant à une déformation relative par rapport à la longueur de 10 % maximum.

On entend par « pièce à souder » une pièce à base de matériaux thermoplastiques, c'est-à-dire une pièce comprenant au moins une matrice de matériaux thermoplastiques. La pièce peut être une pièce ayant une structure d'un seul bloc (pièce monocouche) ou une pièce ayant une structure multicouche (pièce multicouche, par exemple de 2 à 150 couches). Une pièce multicouche peut comprendre des couches de compositions identiques ou de compositions différentes. On entend par « matériau composite », un matériau comprenant des fibres de renfort dans une matrice de matériau thermoplastique. On entend par « matériau non-composite », un matériau dépourvu de fibres de renfort.

On entend par « pièce de référence » une pièce correspondant à un échantillon représentatif d'une pièce à souder.

On entend par « produit de soudage » un produit comprenant au moins deux pièces, telles que décrites ci-contre, soudées ensemble selon un procédé adapté à l'assemblage par soudage de pièces à base de matériaux thermoplastiques.

On entend par « produit de soudage de référence » l'éprouvette selon la présente invention comprenant au moins deux pièces y inclus une pièce perforée de référence, telles que décrites ci-contre, soudées ensemble selon un procédé adapté à l'assemblage par soudage de pièces à base de matériaux thermoplastiques.

Sauf indication contraire, tous les pourcentages concernant des quantités indiquées sont des pourcentages volumiques.

### Procédé d'évaluation d'un assemblage par soudage

La présente invention concerne un procédé d'évaluation d'un assemblage par soudage de pièces à base de matériaux thermoplastiques et ayant des surfaces à souder et des surfaces libres respectives. Le procédé selon l'invention est mis en œuvre à l'aide d'une installation de soudage et d'une éprouvette, telles que décrites ci-dessous.

Dans un premier aspect, l'invention concerne un procédé d'évaluation d'un assemblage par soudage de pièces à base de matériaux thermoplastiques et ayant des surfaces à souder et des surfaces libres respectives comprenant :
- 1- la fourniture d'une éprouvette comprenant au moins deux pièces se chevauchant en partie, telle que décrite ci-dessous ; au moins une des pièces étant une pièce perforée de référence comprenant au moins une perforation dans son épaisseur ;
- 2- la fourniture d'une installation de soudage comprenant au moins un élément de chauffe et au moins un capteur de température ;
- 3- la fourniture de chaleur par l'élément de chauffe ;
- 4- la mesure d'au moins une température interne de l'éprouvette par le capteur de température au niveau de la perforation ;
dans lequel l'élément de chauffe et le capteur de température se déplacent par rapport aux pièces à souder lors du soudage, selon une direction de soudage D.

Le procédé est un procédé dynamique de soudage.

Le procédé comprend une étape de fourniture d'une éprouvette, telle que décrite ci-dessous.

Le procédé comprend une étape de fourniture d'une installation de soudage, telle que décrite ci-dessous, comprenant au moins un élément de chauffe et au moins un capteur de température. L'élément de chauffe, tel que décrit ci-dessous, est choisi parmi les éléments de chauffe adaptés à la mise en œuvre d'un procédé dynamique de soudage, notamment par ultrasons, par induction, par vibration ou par effet résistif. Dans un mode de réalisation particulier, le procédé peut comprendre la fourniture d'un élément de chauffe étant un insert et une étape d'insertion dudit insert entre les surfaces à souder des deux pièces. Ledit insert peut être chauffé par induction, par effet résistif, par vibration, par frottement, par ultrasons ou par utilisation d'un laser par un flux de gaz chaud ou par conduction à partir d'une source externe de chaleur ; préférentiellement par induction ou par effet résistif ; très préférentiellement par induction ou alternativement par effet résistif.

Le procédé comprend une étape de mesure d'au moins une température interne de l'éprouvette par le capteur de température au niveau de la perforation (température interne).

La fourniture d'une éprouvette comprenant au moins une pièce perforée de référence, laquelle comprend au moins une perforation, est particulièrement avantageuse. En effet, elle permet la mesure d'au moins une température interne à l'éprouvette au niveau de la perforation, et non pas seulement la mesure d'au moins une température de la surface libre de la pièce perforée de référence (température de surface). La température interne de l'éprouvette peut différer selon le type de perforation pratiquée dans l'épaisseur de la pièce perforée de référence. En effet, lorsque la perforation traverse intégralement la pièce perforée de référence (perforation traversante), la température interne mesurée est la température de l'interface de soudage, c'est-à-dire à l'interface des deux pièces au niveau de leurs surfaces à souder placées en vis-à-vis l'une de l'autre (température d'interface). Lorsque la perforation traverse seulement en partie la pièce perforée de référence (perforation borgne), la température interne mesurée est la température dans l'épaisseur de la pièce perforée de référence à une profondeur déterminée (température interne à une profondeur déterminée).

Le procédé peut comprendre en outre une étape de mesure d'au moins une température de la surface libre de la pièce perforée de référence (température de surface).

Les températures peuvent être mesurées à l'aide d'au moins un capteur de température. Différents modes de réalisation sont envisageables suivant le type de capteurs de température utilisé. Les températures de surface et internes peuvent être mesurées par le même capteur de température. Alternativement, les températures de surface et internes peuvent être mesurées par différents capteurs de température.

La zone de mesure peut correspondre à différentes zones, notamment la zone d'avant-chauffe, la zone de chauffe, la zone intermédiaire entre la chauffe et le compactage, la zone de soudage (compactage et maintien mécanique) ainsi que les zones après compactage, en fonction de la position du dispositif de soudage par rapport aux perforations de la pièce perforée de référence, selon une direction de soudage D ; préférentiellement au niveau de la zone intermédiaire. Par « zone de chauffe », on entend la zone au niveau de laquelle les pièces à souder sont chauffées par l'élément de chauffe, lequel entraîne une élévation de la température des pièces à souder. La zone de chauffe se déplace conjointement au déplacement de l'élément de chauffe par rapport aux pièces à souder, selon une direction de soudage D. Dans un mode de réalisation particulier, la zone de chauffe correspond à la zone de superposition des pièces à souder et de l'insert. Par « zone intermédiaire » on entend la zone située immédiatement après le passage de l'élément de chauffe, et dans laquelle les pièces à souder ont atteint une température adaptée à leur soudure (température cible). Par « zone de soudage » on entend la zone au niveau de laquelle les pièces sont soudées l'une à l'autre, notamment par application d'une pression. Lorsque l'élément de chauffe est un insert, la température interne mesurée au niveau de la zone de chauffe, avec une perforation traversante positionnée à l'aplomb de l'insert, est la température de l'insert. La température mesurée au niveau de la zone intermédiaire, juste après la zone de chauffe, est la température d'interface maximale de l'éprouvette. La mesure de cette température est particulièrement avantageuse, en ce qu'elle permet de déterminer quelle est la température maximale atteinte par les pièces à souder et si cette température est par exemple inférieure à la température de dégradation les matériaux thermoplastiques composant les pièces. La température mesurée au niveau de la zone intermédiaire, juste avant la zone de soudage, est la température au moment de la soudure. La mesure de cette température est également particulièrement avantageuse, en ce qu'elle permet de corréler la qualité du joint de soudure, notamment sa résistance et son intégrité, à la température de soudure.

Les températures internes et de surface peuvent être mesurées concomitamment ou successivement.

Les températures peuvent être mesurées de manière ponctuelle ou en continu.

Les températures interne et de surface peuvent être mesurées transversalement, c'est-à-dire selon une direction perpendiculaire à la direction de soudage D et à l'épaisseur des pièces à souder, la température de surface étant mesurée au niveau d'au moins une partie pleine (non-perforée) et la température interne étant mesurée au niveau d'au moins une partie creuse traversante ou borgne (perforation). Les températures peuvent être mesurées de manière ponctuelle, avec au moins un point de mesure pour la température de surface et au moins un point de mesure pour la température interne. Alternativement, les températures peuvent être mesurées en continu, préférentiellement d'un bord à l'autre de l'éprouvette. Suivant le capteur de température utilisé, et leur nombre, les températures peuvent être mesurées concomitamment ou successivement. La mesure des températures transversalement permet d'évaluer la variation des températures internes et/ou de surface sur une section transversale de l'éprouvette, et notamment entre le centre et les bords. Ce type de mesure permet d'évaluer l'homogénéité de la température interne et/ou de surface sur l'ensemble de la section transversale de l'éprouvette, les variations thermiques au niveau des bords (effets de bord), etc.

Les températures internes et/ou de surface peuvent être mesurées longitudinalement, en continu ou de manière ponctuelle et répétée à intervalles réguliers, c'est-à-dire selon une direction parallèle à la direction de soudage D et perpendiculaire à l'épaisseur des pièces de référence et passant alternativement des parties pleines (non-perforées) aux parties creuses (perforations). La mesure des températures longitudinalement permet d'évaluer la variation des températures internes et/ou de surface le long de l'éprouvette au fur et à mesure du soudage. Ce type de mesure permet d'évaluer l'évolution de la température interne et/ou de surface le long de l'éprouvette durant le soudage (avancé du moyen de soudage par rapport aux éprouvettes), les variations thermiques pendant le soudage, les variations thermiques au sein de l'épaisseur en fonction de la profondeur et de la position du dispositif de soudage par rapport à l'éprouvette.

Suivant le capteur de température utilisé, par exemple une caméra thermique, il est possible de mesurer simultanément les températures tant de manière transversale que longitudinale.

Le procédé peut comprendre une étape de préchauffage, notamment de la zone à souder et/ou du support, à l'aide de tout moyen approprié. Le préchauffage peut être effectué à l'aide de lampes infrarouges ou d'un jet d'air chaud. La zone à souder et/ou le support doit être préchauffé à une température qui doit rester inférieure à la température de fusion de tous les matériaux constitutifs des pièces à souder. Le préchauffage permet de mieux contrôler la température de l'interface soudée, de limiter le flux thermique au sein des pièces soudées, de contrôler la cristallisation des matériaux, notamment dans la zone de soudage. La chauffe peut être locale, à proximité et au droit des zones à souder.

Le procédé peut comprendre une étape de mise en contact des surfaces à souder des deux pièces par application d'une pression sur au moins une des deux pièces en amont de (c'est-à-dire devant) et/ou en aval de (c'est-à-dire derrière) la position de l'insert par rapport à la direction du soudage D.

Le procédé peut comprendre une étape de refroidissement des pièces soudées. Cette étape de refroidissement contrôlée peut être nécessaire notamment pour une bonne cristallisation du polymère après soudage.-Le procédé d'évaluation décrit dans la présente invention permet également de mesurer les températures dans ces zones de préchauffage et de refroidissement.

Le procédé peut comprendre en outre une étape d'enregistrement des valeurs des températures de surface et/ou internes mesurées. Cela est particulièrement avantageux pour la fabrication de pièces pour l'aéronautique telles que le fuselage car l'enregistrement de ces données est nécessaire pour la qualification d'un procédé aéronautique.

Le procédé peut comprendre en outre une étape de comparaison des températures de surface et/ou internes mesurées avec des températures de surface et/ou internes de référence, notamment les températures de surface et/ou internes théoriques escomptées ou les températures de surface et/ou internes préalablement mesurées et validées. Par exemple, les températures de référence peuvent être le point de fusion de la matrice thermoplastique ou sa température de dégradation. Les températures de référence (températures théoriques escomptées ou températures préalablement mesurées et validées) sont à distinguer des températures mesurées par le procédé selon l'invention, les secondes températures étant comparées avec les premières. Au cours d'un soudage, cette comparaison permet de déterminer si le procédé de soudage est conforme aux prescriptions d'utilisation et si le profil thermique de l'éprouvette correspond au profil thermique théorique escompté ou au profil thermique validé. Cette comparaison permet également de qualifier le procédé de soudage utilisé, sans avoir la nécessité de mesurer les températures internes au cours du soudage des pièces à souder, dont l'éprouvette est un échantillon représentatif. Cela est avantageux dans le domaine de l'aéronautique, qui applique des normes très strictes de sécurité.

Cette étape de comparaison peut correspondre notamment à la comparaison des températures mesurées avec la fenêtre de soudabilité du procédé d'assemblage par soudage. Par « fenêtre de soudabilité » on entend, pour un paramétrage particulier (ou paramétrage de consigne), un procédé permettant l'obtention de températures de surface et internes comprises dans une gamme de température délimitée par la température de fusion et par la température de dégradation de la matrice thermoplastique. Le paramétrage du procédé de soudage correspond à l'ensemble de ses paramètres de consigne, dont la modification d'un seul peut avoir un impact que les températures de surface et internes. En particulier, les températures de chauffe et de soudure mesurées sont comparées à la gamme de température de la fenêtre de soudabilité pour un paramétrage déterminé. Si la température de chauffe est en dessous et/ou si la température de soudure est en dessus de la gamme de température, le paramétrage du procédé de soudage peut être adapté pour que les températures de chauffe et de soudure soient comprises dans la fenêtre de soudabilité.

Le procédé peut comprendre en outre une étape d'étalonnage du paramétrage du procédé d'assemblage par soudage, à savoir le procédé d'assemblage par soudage de pièces à souder, dont l'éprouvette est un échantillon représentatif. Cette étape peut être mise en œuvre notamment après la mesure des températures de surface et/ou d'interface de l'éprouvette et après leur comparaison avec des températures de surface et/ou d'interface de référence. Cette étape peut intervenir notamment après la comparaison des températures de chauffe et de soudure mesurée avec la fenêtre de soudabilité du procédé de soudage. L'étalonnage d'au moins un paramètre de consigne du procédé de soudage permet d'en optimiser les résultats, notamment en termes de performance, d'efficacité, de rapidité, d'intégrité et/ou d'homogénéité du soudage. Les paramètres de consigne peuvent être choisis parmi la température de chauffe, la température de surface de la pièce supérieure à souder, la vitesse de déplacement du dispositif de soudage entre les surfaces à souder des deux pièces, la pression appliquée sur les pièces à souder, la température de refroidissement et/ou la température de régulation des pièces à souder, la proximité entre l'insert et l'inducteur (soudage par induction), l'intensité et la fréquence du champ magnétique (soudage par induction), etc. Au cours d'une production, le procédé selon l'invention présente l'avantage de pouvoir comparer et valider les performances d'une installation de soudage à un moment donné par rapport aux performances initiales approuvées de cette même installation.

### Procédé de soudage

Le procédé d'évaluation d'un assemblage par soudage d'une éprouvette peut être intégré à un procédé d'un assemblage par soudage d'au moins une série de pièces à base de matériaux thermoplastiques, dont l'éprouvette est un échantillon représentatif.

Dans un second aspect, l'invention concerne un procédé d'assemblage par soudage d'au moins une série de pièces à base de matériaux thermoplastiques à souder et ayant des surfaces à souder et des surfaces libres respectives comprenant :
- 1- la détermination du paramétrage de soudage de pièces à base de matériaux thermoplastiques et ayant des surfaces à souder et des surfaces libres respectives, à partir de l'évaluation de l'assemblage par soudage d'une éprouvette formant un échantillon représentatif selon le procédé d'évaluation décrit ci-dessus ;
- 2- la mise en œuvre de l'assemblage par soudage desdites pièces à souder.

Le soudage de l'éprouvette et son évaluation peuvent être mises en œuvre avant le soudage d'au moins une série de pièces à base de matériaux thermoplastiques, dont l'éprouvette est un échantillon représentatif. Cette évaluation préalable permet notamment de vérifier que le paramétrage du procédé de soudage est correct ou, le cas échéant, de l'étalonner.

Le soudage de l'éprouvette et son évaluation peuvent être mis en œuvre après le soudage d'au moins une série de pièces à base de matériaux thermoplastiques, dont l'éprouvette est un échantillon représentatif. Cette post-évaluation permet notamment de vérifier que le paramétrage du procédé de soudage n'a pas changé/dévié au cours de sa mise en œuvre.

Lorsqu'il y a au moins deux séries de pièces à base de matériaux thermoplastiques à souder, l'assemblage par soudage de l'éprouvette et son évaluation peuvent être mises en œuvre entre deux assemblages de pièces à base de matériaux thermoplastiques, dont l'éprouvette est un échantillon représentatif. Cette évaluation intermédiaire permet notamment de vérifier la constance du paramétrage du procédé de soudage.

### Eprouvette

Le procédé selon l'invention comprend la fourniture d'une éprouvette des pièces à souder. L'éprouvette désigne présentement un assemblage comprenant au moins deux pièces y inclus une pièce perforée de référence. Une pièce de référence est un échantillon représentatif d'une pièce à souder, qui comprend une surface libre (surface externe) et une surface à souder (surface interne) placée en vis-à-vis de la surface à souder de l'autre pièce à souder.

Dans un troisième aspect, l'invention concerne une éprouvette pour la mise en œuvre du procédé d'évaluation tel que décrit ci-dessus, cette éprouvette comprenant au moins deux pièces à base de matériaux thermoplastiques ayant des surfaces à souder placées au moins en partie en vis-à-vis l'une de l'autre et des surfaces libres respectives, au moins une des pièces étant une pièce perforée de référence comprenant au moins une perforation.

Les dimensions et la forme des pièces formant l'éprouvette peuvent varier selon les pièces à souder, le type de procédé d'assemblage par soudage utilisé, le mode opératoire, les conditions de mise en œuvre, etc. Ainsi, l'homme du métier déterminera les caractéristiques des éprouvettes à utiliser en fonction du procédé d'assemblage sélectionné, en fonction des pièces à souder, etc. La présente invention n'est donc pas limitée à des éprouvettes comprenant des pièces ayant des formes, des dimensions et/ou un pourcentage de chevauchement déterminés. En effet, l'éprouvette selon la présente invention peut être utilisée avec tout type de procédé de soudage de pièces à base de matériaux thermoplastiques adapté.

L'éprouvette comprend au moins deux pièces. Ces pièces peuvent être rigides en ce qu'elles ne se déforment pas ou se déforment peu sous leur propre poids. Leur rigidité peut être caractérisée par un test de déformation tel que défini ci-dessus. En particulier, les pièces sont aussi rigides dans les conditions thermiques de l'opération de soudage, c'est-à-dire qu'elles sont rigides avant, pendant et après le soudage. Chaque pièce formant l'éprouvette peut avoir les caractéristiques de la pièce correspondante à souder dont elle forme un échantillon représentatif. Ainsi, à titre d'exemple, la pièce de référence peut être une pièce comprenant des matériaux non-composites ou des matériaux composites, une pièce monocouche ou une pièce multicouche.

Chaque pièce de référence peut être de toute forme adaptée, en particulier chaque pièce de référence est de forme parallélogramme, préférentiellement de forme carrée ou rectangulaire, très préférentiellement de forme rectangulaire.

Chaque pièce peut être de toute dimension adaptée, notamment de toute longueur adaptée, de toute largeur adaptée et de toute épaisseur adaptée. Par « longueur » on entend la dimension parallèle (longitudinale) à la direction du soudage. Par « largeur » on entend la dimension perpendiculaire (transversale) à la direction du soudage. Les dimensions d'une pièce de référence peuvent correspondre de 1 à 20 % des dimensions de la pièce à souder correspondante.

Les pièces formant l'éprouvette se chevauchent en tout ou partie.

Au moins une des pièces formant l'éprouvette est une pièce perforée de référence comprenant au moins une perforation.

La perforation peut traverser intégralement la pièce perforée de référence (perforation traversante). Alternativement, elle peut traverser seulement en partie la pièce perforée de référence (perforation borgne), à une profondeur plus ou moins grande.

La fourniture d'une pièce perforée de référence permet la mesure d'au moins une température interne, en plus de la mesure optionnelle de la température de surface au niveau de la surface libre de la pièce perforée de référence. Suivant le type de perforation pratiquée dans l'épaisseur de la pièce perforée de référence, différentes températures internes peuvent être mesurées. Une perforation traversante permet la mesure de la température d'interface des surfaces à souder des pièces de référence (température d'interface). Une perforation borgne permet la mesure d'une température dans l'épaisseur de la pièce perforée de référence à une profondeur donnée (température interne à une profondeur déterminée).

La perforation peut être toute perforation de toute section adaptée, notamment une perforation de section carrée ou une perforation de section rectangulaire (rainure) ou une perforation de section circulaire (trou). Les rainures peuvent avoir toute orientation adaptée, notamment être orientées transversalement, longitudinalement ou obliquement par rapport à la direction du soudage. Préférentiellement, les perforations ne s'étendent pas sur l'ensemble de la largeur ou de la longueur de la section perforée. En effet, de telles perforations pourraient avoir un impact négatif sur le soudage, et notamment entrainer une dissipation de la température, réduire la résistance des joints de soudure. Dans un mode de réalisation particulier, la pièce perforée dé référence comprend des perforations de section circulaire.

La section de chaque perforation doit être nécessaire et suffisante pour permettre la mesure de la température d'interface, sans avoir un effet significatif sur le profil thermique de l'éprouvette, telle que la dissipation de la chaleur. Lorsque la perforation est de section circulaire, elle peut avoir un diamètre entre 0,5 et 10 mm. La pièce perforée de référence peut comprendre au moins trois sections, à savoir une première section perforée, une deuxième section non-perforée et une troisième section perforée, les sections perforées comprenant respectivement au moins une perforation et encadrant la section non-perforée. Par « première section » on entend la section de la pièce qui va être soudée en premier, c'est-à-dire avant les deuxième et troisième sections, par rapport à la direction de soudage D. Par « troisième section », on entend la section qui va être soudée en dernier, c'est-à-dire après les première et deuxième sections, par rapport à la direction de soudage D. Il est avantageux de fournir une pièce perforée de référence comprenant une section centrale non-perforée entourée par deux sections perforées. En effet, les mesures de températures au niveau des sections perforées permettent de s'assurer que le profil thermique de l'éprouvette ne varie pas significativement au cours du soudage, permettant dès lors l'extrapolation du profil thermique de la section centrale non-perforée. En outre, cette section centrale peut être utilisée pour réaliser des tests additionnels, de manière générale un contrôle destructif ou non destructif, par exemple la résistance mécanique du joint de soudure, une analyse visuelle, une analyse microscopique, une analyse physico-chimique

La pièce perforée de référence, notamment la première section et/ou la troisième section perforée, peut comprendre au moins deux perforations, préférentiellement au moins trois perforations, alignées perpendiculairement à la direction de soudage D. Ces perforations peuvent être localisées à différents endroits alignés perpendiculairement à la direction de soudage D, telles qu'en son centre, à proximité de l'un des bords, etc. Dans un mode de réalisation particulier, l'une au moins des sections perforées de la pièce perforée de référence comprend au moins trois perforations transversales adjacentes, dont une première perforation située à proximité d'un bord de la pièce, une deuxième perforation située en son centre et une troisième perforation située à proximité du bord opposé de la pièce. Cette disposition permet la mesure et la comparaison des températures à différents endroits de la largeur de la pièce et donc l'observation du profil thermique transversal de la pièce. Par exemple, lorsque les perforations sont situées respectivement au centre et sur les bords opposés de la pièce, la mesure et la comparaison des températures permet l'observation des différences de température sur la largeur de la pièce, et notamment les effets de bord.

La pièce perforée de référence, notamment la première section et/ou la troisième section perforée, peut comprendre au moins deux séries de perforations longitudinales, préférentiellement au moins trois séries de perforations, alignées parallèlement à la direction de soudage D. Par « séries de perforations longitudinales », on entend des séries de perforations - particulièrement identiques en forme, en dimensions et en localisation transversale - qui se répètent de manière régulière le long d'une section perforée. Cette disposition permet la mesure et la comparaison des températures à différents endroits de la longueur de la pièce et donc l'observation du profil thermique longitudinal de la pièce et donc du soudage le long de la pièce.

Les perforations transversales adjacentes et les séries de perforations longitudinales peuvent former un motif particulier, en particulier un motif géométrique régulier. Les perforations peuvent former un motif en damier ou un motif en quinconce. Lorsque le motif est régulier, la distance entre deux perforations adjacentes transversales et/ou entre deux perforations adjacentes longitudinales est uniforme. Les sections perforées de la pièce perforée peuvent avoir le même motif de perforations ou des motifs différents, préférentiellement le même motif. Dans un mode de réalisation particulier, les sections perforées comprennent un motif en damier comprenant trois perforations adjacentes transversales et au moins trois séries de perforations longitudinales.

La pièce perforée de référence peut comprendre différents types de perforations, c'est-à-dire au moins une perforation traversante et au moins une perforation borgne, préférentiellement au moins deux perforations borgnes. Fournir une pièce perforée de référence avec différents types de perforation permet de mesurer un gradient de température depuis la surface libre de la pièce perforée de référence jusqu'à l'interface des deux pièces à souder.

La perforation peut être dépourvue de tout matériau. Alternativement, la perforation peut comprendre un matériau transparent permettant la mesure de la température par un capteur de température adapté, par exemple une caméra thermique tel que décrit ci-dessous. Combler la perforation avec un matériau transparent à l'avantage de permettre la mesure de la température interne, tout en agissant comme un isolant thermique pour limiter les pertes convectives.

La deuxième pièce formant l'éprouvette peut être une pièce à souder ou un échantillon représentatif de celle-ci. Le procédé d'évaluation selon l'invention peut être mis en œuvre en utilisant une éprouvette comprenant uniquement des pièces de référence y inclus la pièce perforée de référence, correspondant à des échantillons représentatifs des pièces à souder. Alternativement, le procédé d'évaluation selon l'invention peut être mis en œuvre en utilisant une éprouvette comprenant une pièce perforée de référence, correspondant à un échantillon représentatif d'une première pièce à souder, et une deuxième pièce à souder en tant que telle. Dans ce mode de réalisation, la pièce perforée de référence est utilisée *in situ* directement avec la deuxième à souder.

La deuxième pièce de référence peut être perforée ou non-perforée ; préférentiellement non-perforée. La pièce perforée et la deuxième pièce sont préférentiellement respectivement la pièce supérieure et la pièce inférieure de l'éprouvette. Les termes « supérieure » et « inférieure » sont définis par rapport à leur positionnement sur l'installation de soudage, sur laquelle les pièces à souder sont positionnées en vue de leur assemblage.

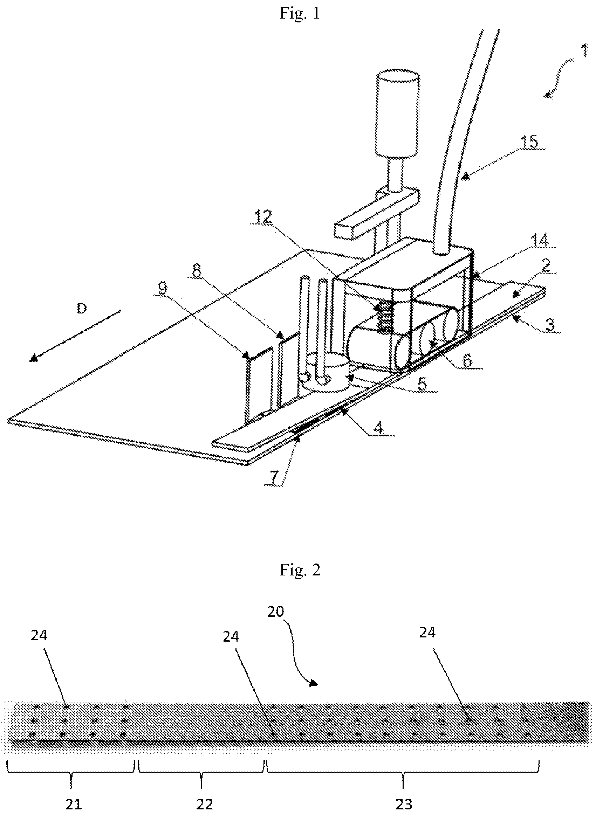

Une pièce perforée de référence 20 est représentée à la figure 2. Elle comprend une première section perforée 21, une deuxième section centrale non perforée 22 et une troisième section perforée 23. La première section 21 et la troisième section 23 comprennent chacune respectivement quatre et dix séries longitudinales de trois perforations à section circulaire 24.

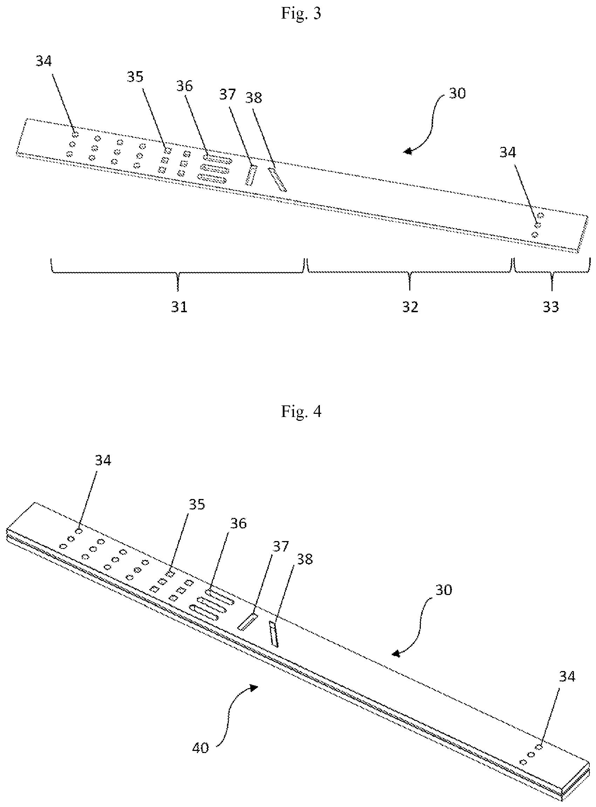

Une pièce perforée de référence 30 est représentée aux figures 3 et 4. Elle comprend une première section perforée 31, une deuxième section centrale non perforée 32 et une troisième section perforée 33. La première section 31 comprend des perforations de différentes sections, à savoir des perforations à section circulaire 34, des perforations à section carrée 35 et des perforations à section rectangulaires (rainures) orientées longitudinalement 36, transversalement 37 ou obliquement 38. La troisième section 33 comprend une série de trois perforations à section circulaire 34.

Dans la figure 4, la pièce perforée de référence est associée à une deuxième pièce non-perforée de référence 40, de forme et de dimensions identiques.

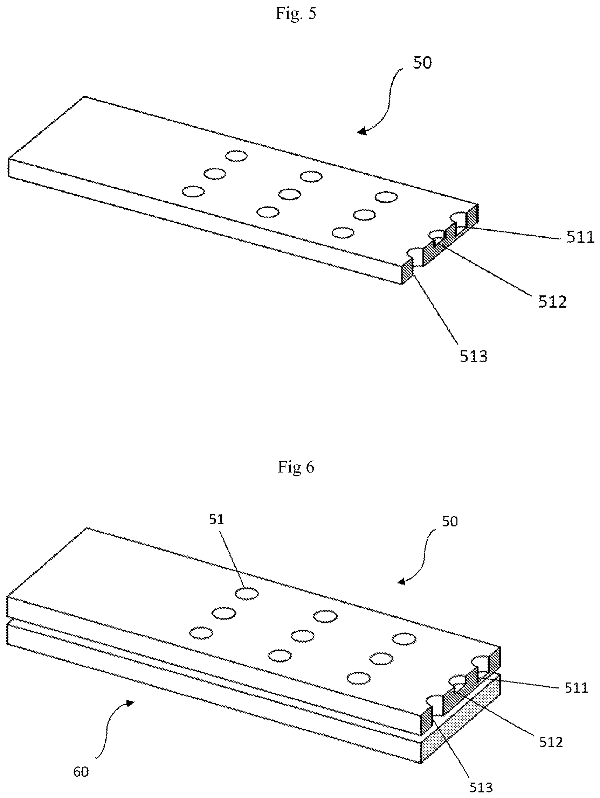

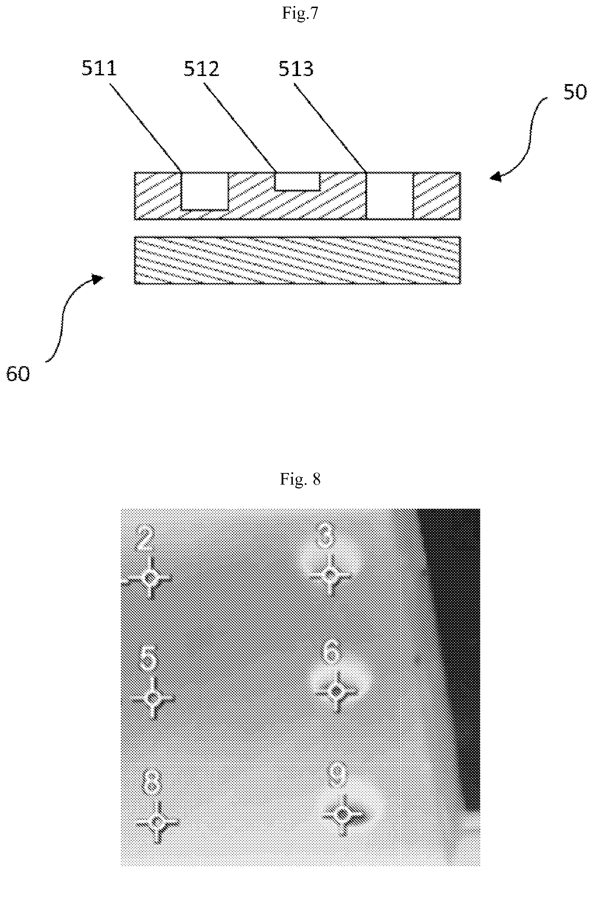

Une portion de la première section perforée d'une pièce perforée de référence 50 est représentée aux figures 5, 6 et 7. La première section comprend des perforations de section circulaire 51 de différentes longueurs, les perforations étant traversantes 513 ou borgnes 511, 512. Dans les figures 6 et 7, la première portion perforée de la pièce perforée de référence 50 est associée la section correspondante de la deuxième pièce non-perforée de référence 60, de forme et de dimensions identiques.

Les pièces de référence, ou au moins une des couches les constituant, peuvent comprendre une matrice à base de matériaux thermoplastiques. Les couches peuvent comprendre les mêmes matériaux thermoplastiques ou différents types/grades de matériaux thermoplastiques compatibles. Les matériaux thermoplastiques peuvent être choisis parmi les polyamides (PA), par exemple un polyphtalamide (PPA), du PA 11, du PA 12, du PA 6, du PA 1010, du PA 66, du PA 46 ou un copolyamide ; les polysulfones ; le polysulfure de phénylène (PPS) ; les polyimides, par exemple du polyétherimides (PEI) ; les polyaryléthercétones (PAEK), par exemple les polyéthercétonecétones (PEKK) et/ou polyétheréthercétones (PEEK) ; le polytéréphtalate d'éthylène ; les polyoléfines, par exemple le polypropylène ; les polymères chlorés, par exemple le polychlorure de vinyle (PVC) et le polyfluorure de vinylidène (PVDF) ; les polymères acryliques ou méthacryliques ou leurs mélanges Le matériau thermoplastique peut être un matériau thermoplastique amorphe, cristallin ou semi-cristallin.

Chaque pièce de référence peut être constituée essentiellement, ou constituées, de matériau thermoplastique. Alternativement, chaque pièce de référence peut comprendre une quantité de matrice du matériau thermoplastique allant de 20 % à 75 % en volume, préférentiellement de 30 % à 55 % en volume, par rapport au volume total de la pièce.

Les pièces de référence, ou au moins une des couches les constituant référence, peuvent comprendre en outre des additifs fonctionnels, préférentiellement des additifs fonctionnels choisis parmi les tensioactifs, les stabilisants ultra-violets (UV), les stabilisants thermiques, les agents biocides, les modifiants chocs, les agents expansifs ou leurs mélanges.

Les pièces de référence peuvent comprendre de 0 à 30 % en volume d'additifs fonctionnels.

Les pièces de référence, ou au moins une des couches les constituant, peuvent comprendre en outre des charges, notamment des charges fibreuses et/ou des charges non-fibreuses.

Les charges non fibreuses peuvent être choisies parmi les charges minérales, en particulier parmi l'alumine, la silice, le carbonate de calcium, le dioxyde de titane, les billes de verre, le noir de carbone, le graphite, le graphène, les nanotubes de carbone ou leurs mélanges.

Les charges fibreuses peuvent être choisies parmi les fibres dites coupées ou des fibres de renfort continues. Les fibres de renfort permettent notamment de rigidifier les pièces.

Les fibres de renfort peuvent être choisies parmi les fibres de verre, les fibres de quartz, les fibres de carbone, les fibres de graphite, les fibres de basalte, les fibres de silice, les fibres métalliques, les fibres céramiques, les fibres naturelles végétales, les fibres organiques de synthèse, ou leurs mélanges.

Chaque pièce de référence peut comprendre de 25 à 80 % en volume, préférentiellement de 45 à 70 % en volume, de fibres de renfort, par rapport au volume total de la pièce.

Dans un quatrième aspect, la présente invention concerne l'utilisation de l'éprouvette telle que décrite ci-dessus pour l'évaluation d'un procédé d'assemblage par soudage de pièces à base de matériaux thermoplastiques à souder, l'éprouvette étant un échantillon représentatif desdites pièces ; préférentiellement pour la comparaison par rapport à une référence, pour le calibrage d'au moins un paramètre de soudage, pour l'étalonnage d'au moins un paramètre de soudage et/ou pour la surveillance d'un procédé d'assemblage par soudage.

### Joint de soudure

Outre les pièces à souder, aucune autre matière thermoplastique n'est ajoutée lors du procédé de soudage, notamment à l'interface des surfaces à souder. Le joint de soudure entre les deux pièces à souder est donc formé par les matrices de matériaux thermoplastiques des pièces elles-mêmes, notamment par interpénétration.

### Installation

Le procédé de soudage est mis en œuvre à l'aide d'une installation de soudage. L'installation de soudage pour la mise en œuvre du procédé d'évaluation d'un assemblage par soudage d'une éprouvette telle que décrite ci-dessus, peut comprendre : un support pour porter l'éprouvette à souder ; au moins un élément de chauffe, configuré pour chauffer les pièces à souder ; au moins un capteur de température, configuré pour mesurer les températures de surface et/ou internes de l'éprouvette ; l'élément de chauffe et le capteur de température étant configurés pour se déplacer par rapport aux pièces de référence à souder lors du soudage, selon une direction de soudage D.

Le procédé d'évaluation selon l'invention peut être mis en œuvre avec toute installation de soudage conventionnelle adaptée, notamment par ajout d'un capteur de température. Une installation de soudage particulièrement adaptée est l'installation de soudage 1 décrite dans la demande PCT/FR2019/051775 déposée le 16 juillet 2019 (non-publiée). Une vue en perspective schématique de l'installation 1 est représenté en figure 1. L'installation de soudage 1 dans selon la demande PCT/FR2019/051775 comprend notamment un support (non représenté) pour porter des pièces 2, 3 à souder ; un insert 4 comprenant un matériau sensible à l'induction situé à l'extrémité d'un premier bras 8 ; un inducteur 5 correspondant ; un élément écarteur 7 situé à l'extrémité d'un deuxième bras 9 ; un vibreur 12 ; une enceinte à température contrôlée 14 alimentée par un tuyau de soufflage 15 ; des rouleaux de compactage 6 entourés d'une chenille. De telles installations conventionnelles peuvent être adaptées, notamment, par ajout d'un capteur de température. L'installation comprend un support pour porter au moins une des pièces formant l'éprouvette ; préférentiellement la pièce non-perforée de référence. Ce support comporte préférentiellement une face plane ou de toute autre forme appropriée destinée à porter une des pièces formant l'éprouvette.

L'installation comprend un élément de chauffe. Tout élément de chauffe adapté à la mise en œuvre d'un procédé de soudage dynamique selon l'invention peut être utilisé, notamment la chauffe par induction, par effet résistif, par vibration, par frottement, par ultrasons, par utilisation d'un laser, par flux de gaz chaud ou par conduction à partir d'une source externe de chaleur.

L'élément de chauffe peut être un insert. L'insert est configuré pour être inséré entre les surfaces à souder des deux pièces formant l'éprouvette. L'insert peut être chauffé par tout moyen de chauffe approprié, notamment par induction, par effet résistif, par vibration, par frottement, par ultrasons, par utilisation d'un laser, par un flux de gaz chaud ou par conduction à partir d'une source externe de chaleur.

L'insert comprend un matériau adapté au moyen de chauffe.

Pour le soudage par induction, l'insert comprend un matériau sensible à l'induction et l'insert est chauffé par induction (effet inducteur). L'effet inducteur est généré par application d'un champ magnétique généré par un inducteur. Le matériau sensible à l'induction peut être un matériau suscepteur ou absorbeur de champ magnétique, préférentiellement un matériau métallique sensible à l'induction, très préférentiellement un matériau métallique choisi parmi le fer, l'acier (par exemple un acier inoxydable), l'aluminium, le nickel-chrome, le titane ou leurs combinaisons. Pour le soudage par effet résistif, l'insert comprend un matériau conducteur résistif, et l'insert est chauffé par effet résistif (ou effet Joule). Le matériau conducteur résistif peut être choisi parmi les alliages de nickel, les alliages de plomb, les alliages de titane, les alliages de manganèse, les alliages nickel-chrome, les alliages fer-chrome-aluminium et les alliages nickel-cuivre. L'effet résistif est généré par application d'un courant électrique.

Pour le soudage par utilisation de laser, l'insert peut être chauffé directement par au moins un laser. Alternativement, l'insert peut comprendre un réseau de fibres optiques permettant de diriger l'énergie de chauffage laser vers les surfaces à souder. Pour le soudage par un flux de gaz chaud, l'insert peut être chauffé directement par le flux de gaz chaud, par exemple par contact. Alternativement, l'insert peut comprendre au moins une canalisation permettant la circulation du flux de gaz chaud dans l'insert.

Pour le soudage par conduction, l'insert peut être chauffé par toute source externe de chaleur adaptée.

L'insert est avantageusement une plaque. L'insert a une épaisseur de 5 mm ou moins, préférentiellement de 0,3 à 5 mm ; très préférentiellement de 0,3 à 3 mm, plus préférentiellement de 0,5 à 1,5 mm, encore plus préférentiellement de 0,5 à 1 mm. Par « épaisseur », on entend la dimension entre les surfaces de l'insert en contact avec les surfaces à souder. Si les surfaces de l'insert ne sont pas planes et parallèles entre elles, l'épaisseur correspond à la dimension maximale entre ces deux surfaces. De telles épaisseurs assurent la rigidité de l'insert, un bon transfert thermique et une faible déformation mécanique des pièces rigides lors du passage de l'insert et rend possible le soudage de pièces rigides.

Lors du soudage, l'insert se déplace par rapport aux pièces à souder, selon une direction de soudage D. Le déplacement relatif de l'insert par rapport aux pièces à souder peut s'effectuer en déplaçant uniquement les pièces à souder (l'insert restant fixe par rapport au support) ou alternativement en déplaçant uniquement l'insert par rapport au support (les pièces étant fixes par rapport au support).

L'installation peut comprendre en outre au moins un bras, à l'extrémité duquel est situé le dispositif de soudage, à savoir l'insert. L'insert peut être fixé de manière solidaire au bras.

L'installation comprend au moins un capteur de température. Ce capteur permet la mesure des températures de surface des pièces formant l'éprouvette, notamment les températures de surfaces de la pièce perforée supérieure. Ce capteur permet également la mesure des températures internes de l'éprouvette, au niveau des perforations des sections perforées de la pièce perforée de référence.

Les capteurs peuvent être choisis parmi les pyromètres, les thermocouples, les caméras thermiques, etc. Dans un mode de réalisation particulier, le capteur de température est une caméra thermique. La caméra thermique fournit une image en temps réel de la pièce perforée de référence. Il est possible de définir une zone d'acquisition au sein de cette image, la zone d'acquisition correspondant préférentiellement à la zone intermédiaire placée entre la zone de chauffe et la zone de soudage. L'utilisation d'une caméra thermique est particulièrement avantageuse en ce qu'elle permet de mesurer l'ensemble des températures d'intérêt, tant transversalement que longitudinalement, notamment la température de surface de la pièce perforée de référence ; la température d'interface, notamment la température maximale à l'interface des pièces à souder au niveau de la zone intermédiaire juste après la zone de chauffe ou la température de soudure en zone intermédiaire juste avant la zone de compactage ; la température interne de la pièce perforée à une profondeur déterminée ; la température de l'élément de chauffe si pertinent, notamment la température de l'insert pour les soudage par induction.

Les capteurs de température peuvent mesurer de manière continue ou ponctuelle les températures de surface et internes des pièces à souder.

Le capteur de température peut être positionné au niveau de différentes zones, notamment la zone d'avant-chauffe, la zone de chauffe, la zone intermédiaire, la zone de soudage, etc. Le capteur de température est préférentiellement positionné au niveau de la zone intermédiaire, après la chauffe et avant le soudage.

Lors du soudage, le capteur de mesure de la température et l'élément de chauffe se déplacent conjointement par rapport aux pièces à souder, selon la direction de soudage D. Par l'expression « se déplacer conjointement », on entend se déplacer en même temps, dans la même direction (ici la direction de soudage D) et à la même vitesse.

Lorsque l'élément de chauffe est un insert, le capteur de température est solidaire du bras sur lequel l'insert est fixé.

Pour le soudage par induction, l'installation peut comprendre en outre au moins un inducteur pour générer un champ magnétique.

Lors du soudage, l'inducteur peut se déplacer par rapport aux pièces à souder, selon une direction de soudage D. De manière avantageuse, l'insert et l'inducteur se déplacent conjointement par rapport aux pièces à souder lors du soudage, selon la direction de soudage D.

L'inducteur peut être solidaire du bras de l'insert.

L'installation peut comprendre en outre au moins un élément d'application de pression, en particulier au moins un rouleau de plaquage et/ou au moins un rouleau de compactage. Ces éléments d'application de pression peuvent être positionnés derrière et/ou devant l'insert par rapport à la direction du soudage D. Les éléments d'application de pression permettent d'appliquer une pression sur les pièces de sorte que celles-ci soient pressées l'une contre l'autre.

L'installation peut comprendre en outre au moins un bloc de régulation thermique. Le bloc de régulation thermique permet de réduire la température des surfaces libres de la pièce soudée par rapport à la température de soudage, tout en maintenant les surfaces à souder, et donc de l'interface de soudage, à une température supérieure à la température de fusion du polymère thermoplastique.

Le bloc de régulation thermique est préférentiellement positionné derrière l'insert par rapport à la direction du soudage D et devant les éléments d'application de pression (si présent).

Cette étape de refroidissement permet de maîtriser le gradient de température au sein de la pièce soudée, et limite, voire empêche, le décompactage.

L'installation peut comprendre en outre une enceinte à température contrôlée, délimitant deux zones situées respectivement à l'intérieur et à l'extérieur de cette enceinte. Cette enceinte permet de maintenir une zone des pièces à une température spécifique. Il peut s'agir d'une température de recristallisation, derrière l'insert par rapport à la direction du soudage D, afin de permettre une recristallisation dans des conditions optimales et d'éviter une post-cuisson des pièces après soudage. Il peut s'agir d'un refroidissement en dehors de la zone de soudage.

L'enceinte à température contrôlée est positionnée au niveau de la zone de soudage, préférentiellement devant et/ou derrière l'insert par rapport à la direction du soudage D.

Lors du soudage, l'enceinte à température contrôlée et l'insert peuvent se déplacer conjointement par rapport aux pièces à souder, selon la direction de soudage D. L'enceinte à température contrôlée peut être solidaire du bras de l'insert et/ou de l'inducteur (si présent).

La température de la zone délimitée par l'enceinte et/ou la zone située à l'extérieur peut être obtenue par l'insufflation d'un fluide, préférentiellement respectivement de l'air chaud ou de l'air froid, à l'aide d'au moins un tuyau de soufflage.

L'enceinte à température contrôlée peut être délimitée au moyen d'une jupe souple, éventuellement fixée à la périphérie d'une plaque supérieure.

### Système de soudage

Selon un cinquième aspect, la présente invention concerne un système de soudage pour la mise en œuvre de l'évaluation d'un assemblage par soudage comprenant une éprouvette et une installation de soudage, telles que décrites ci-dessus.

### Automatisation des déplacements

Les déplacements de l'élément de chauffe/dispositif de soudage et/ou du capteur de température et/ou de l'inducteur (si présent) et/ou des éléments d'application de pression et/ou de l'enceinte à température contrôlée peuvent être réalisés de manière automatisée, par un ou plusieurs robots, ou alternativement manuellement par un opérateur.

De tels modes de réalisation sont particulièrement avantageux pour l'assemblage de pièces de fuselage dans le domaine de l'aéronautique car le contrôle de la température de soudage est nécessaire pour la qualification d'un procédé aéronautique.

### Exemples

Les exemples suivants illustrent l'invention sans la limiter.

### Fourniture d'éprouvette selon l'invention

Les éprouvettes utilisées dans les tests reportés ci-dessous comprennent deux pièces à base de matériaux thermoplastiques et ayant des surfaces à souder et des surfaces libres respectives y inclus une pièce perforée de référence.

Les pièces perforées de référence 20, telles que représentées à la figure 2, comprennent une matrice thermoplastique à base de polymère PPS (43 % en poids), ainsi que des fibres de carbone tissées. Ces pièces ont une épaisseur d'environ 1,86 mm, une longueur d'environ 500 mm et une largeur d'environ 35 mm. Elles comprennent une première zone perforée 21 comprenant quatre séries longitudinales de trois perforations transversales 24, une deuxième zone centrale 22 dépourvue de perforation et une troisième zone perforée 23 comprenant dix séries longitudinales de trois perforations transversales. Les perforations 24 sont traversantes et ont un diamètre d'environ 5 mm.

La deuxième pièce (non représentée) formant l'éprouvette correspond à une pièce identique à la pièce de référence 20 de la Fig. 2 mais ne présentant aucune perforation.

Deux éprouvettes différentes ont été testées, à savoir une première éprouvette dont les pièces de référence comprennent une matrice thermoplastique à base de polymère PPS comprenant des fibres de carbone tissées 5HS ; ou une deuxième éprouvette dont les pièces de référence comprennent une matrice thermoplastique à base de polymère PEKK (Kepstan 7002^{™}) (37 % en poids) comprenant des fibres de carbone unidirectionnelles Hextow AS7.

### Fourniture d'une installation de soudage

Une installation de soudage, similaire à celle représentée à la figure 1, comprenant notamment un support, un insert fixé à l'extrémité d'un bras, un inducteur, une caméra thermique (élément de chauffe) et un rouleau de compactage est fournie. L'inducteur et la caméra thermique sont solidaires du bras de l'insert et se déplacent donc conjointement à l'insert.

Les températures de surface et internes de l'éprouvette sont mesurées au niveau de la zone intermédiaire, c'est-à-dire juste après la zone de chauffe et avant la zone de soudage (compactage). Les températures de surface sont mesurées au niveau des zones pleines de la pièce perforée de référence. Les températures internes (à l'interface entre les deux pièces à souder) sont mesurées au niveau des perforations.

### Mise en œuvre du procédé selon l'invention

Le procédé selon l'invention peut être mis en œuvre selon différents paramétrages prédéterminés. La modification d'au moins un paramètre de consigne, par exemple la température de l'insert, permet de modifier la mise en œuvre du soudage de l'éprouvette et d'avoir un impact sur sa performance. En particulier, la modification d'au moins un paramètre va avoir un impact sur les températures de surface et internes mesurées.

### Mesure des températures de surface et internes de l'éprouvette formée de deux pièces de référence Kepstan 7002^{™}/ Hextow AS7

La figure 8 est l'image en temps réel de la pièce perforée de référence 20 obtenue avec une caméra thermique selon un paramétrage déterminé. Cette image prise par le dessus de la pièce perforée de référence 20 illustre les différences de températures mesurées entre les parties pleines (non-perforées) et les parties creuses (perforations 24), où sont mesurées respectivement les températures de surface et les températures d'interface (°C). Les températures d'interface au niveau des troisième, sixième et neuvième perforations sont visibles en gris clair, alors que la température de surface de la zone pleine entourant les perforations est visible en gris foncé, démontrant que la température de surface est inférieure aux températures d'interface.

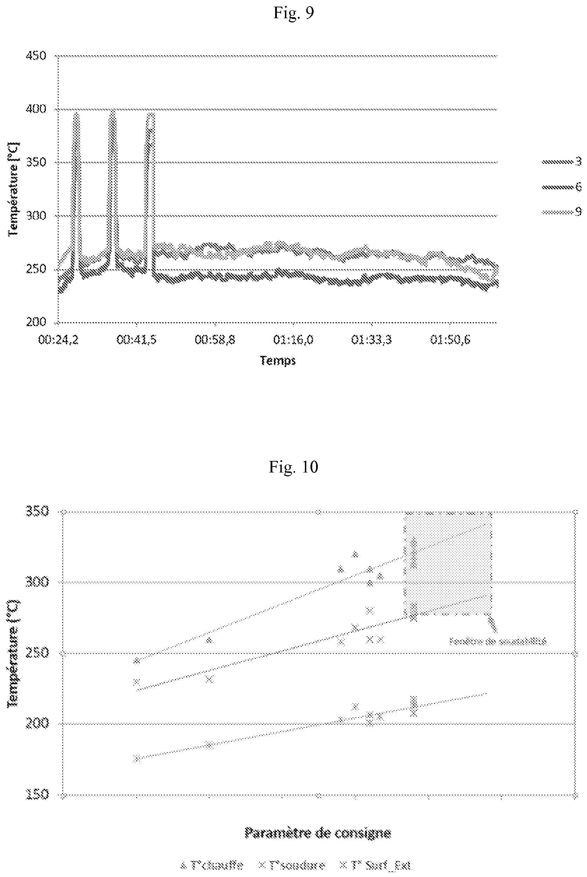

La figure 9 est représentation graphique des températures de surface et d'interface (°C) mesurées/enregistrées en fonction du temps, lors du déplacement conjoint de l'insert et de la caméra thermique, au niveau de la zone intermédiaire, juste avant le passage du dispositif de compactage et donc du soudage. Les températures d'interface mesurées au niveau des perforations ont une valeur d'environ 360-390 °C, alors que les températures de surface ont une valeur d'environ 275 et 240 °C.

### Détermination de la fenêtre de soudabilité en utilisant une éprouvette avec un renfort tissé SHS/PPS

La figure 10 est représentation graphique des températures de chauffe, de soudure et de surface (°C) mesurées/enregistrées en fonction de différents paramétrages du procédé d'évaluation.

La gamme de température de la fenêtre de soudabilité est délimitée par le point de fusion de la matrice thermoplastique (limite inférieure) et la température de dégradation de la matrice thermoplastique (limite supérieure). La mesure des températures de surface et internes - notamment les températures de surface, de chauffe et de soudure - selon différents paramétrages permet de déterminer les paramétrages pour lesquels les températures de surface et internes correspondent à la fenêtre de soudabilité, telle que représentée sur la figure 10. Ces paramétrages pourront être utilisés pour souder les pièces, dont l'éprouvette est un échantillon représentatif.

## Revendications

1. Procédé d'évaluation d'un assemblage par soudage de pièces à base de matériaux thermoplastiques et ayant des surfaces à souder et des surfaces libres respectives (2,3) comprenant:
- 1- la fourniture d'une éprouvette comprenant au moins deux pièces (20,30,40,50,60) se chevauchant au moins en partie ;
au moins une des pièces étant une pièce perforée de référence (20,30,50) comprenant au moins une perforation dans son épaisseur ;
-2- la fourniture d'une installation de soudage (1) comprenant au moins un élément de chauffe et au moins un capteur de température ;
-3- la fourniture de chaleur par l'élément de chauffe ;
-4- la mesure d'au moins une température interne de l'éprouvette par le capteur de température au niveau de la perforation ;
dans lequel l'élément de chauffe et le capteur de température se déplacent par rapport aux pièces à souder lors du soudage (2,3), selon une direction de soudage D.

2. Procédé selon la revendication 1, dans lequel l'élément de chauffe est un insert (4), ledit insert (4) étant inséré entre les surfaces à souder des deux pièces à souder (2,3).

3. Procédé selon la revendication 2, dans lequel ledit insert (4) est chauffé par induction, par effet résistif, par vibration, par frottement, par ultrasons ou par utilisation d'un laser par un flux de gaz chaud ou par conduction à partir d'une source externe de chaleur.

4. Procédé selon l'une quelconque des revendications précédentes, dans lequel la perforation est une perforation traversant en tout ou partie l'épaisseur de la pièce perforée de référence (20,30,50).

5. Procédé selon l'une quelconque des revendications précédentes, dans lequel la perforation est une perforation de section carrée (35), de section rectangulaire (36,37,38) ou de section circulaire (24,34,51,511,512,513).

6. Procédé selon l'une quelconque des revendications précédentes, dans lequel la pièce perforée de référence (20,30,50) comprend au moins deux perforations alignées perpendiculairement et/ou au moins deux perforations alignées parallèlement à la direction de soudage D.

7. Procédé selon l'une quelconque des revendications précédentes, dans lequel la pièce perforée de référence (20,30,50) comprend au moins une première section perforée (21,31), une deuxième section non perforée (22,32) et une troisième section perforée (23,33) ;
les sections perforées comprenant respectivement au moins une perforation et encadrant la section non-perforée.

8. Procédé selon l'une quelconque des revendications précédentes comprenant en outre la mesure d'au moins une température de la surface libre de la pièce perforée de référence (20,30,50).

9. Procédé selon l'une quelconque des revendications précédentes, dans lequel la température de surface et la température interne sont mesurées transversalement et/ou longitudinalement, par rapport à la direction de soudage D.

10. Procédé selon l'une quelconque des revendications précédentes comprenant en outre l'enregistrement des valeurs de températures.

11. Procédé selon l'une quelconque des revendications précédentes comprenant en outre la comparaison des températures mesurées avec des températures de référence.

12. Procédé selon l'une quelconque des revendications précédentes comprenant en outre une étape de calibration des paramètres du procédé d'assemblage par soudage.

13. Procédé d'assemblage par soudage d'au moins une série de pièces à base de matériaux thermoplastiques à souder et ayant des surfaces à souder et des surfaces libres respectives (2,3) comprenant :
- 1- la détermination du paramétrage de soudage desdites pièces à souder (2,3), à partir de l'évaluation de l'assemblage par soudage d'une éprouvette formant un échantillon représentatif selon les revendications 1 à 12; et
- 2- la mise en œuvre de l'assemblage par soudage desdites pièces à souder (2,3).

14. Eprouvette pour la mise en œuvre du procédé d'évaluation d'un assemblage par soudage de pièces à base de matériaux thermoplastiques (2,3) selon l'une quelconque des revendications 1 à 12, ladite éprouvette comprenant au moins deux pièces à base de matériaux thermoplastiques ayant des surfaces à souder placées au moins en partie en vis-à-vis l'une de l'autre et des surfaces libres respectives (20,30,40,50,60), au moins une des pièces étant une pièce perforée de référence (20,30,50) comprenant au moins une perforation.

15. Utilisation de l'éprouvette selon la revendication 14 pour l'évaluation d'un assemblage par soudage de pièces à base de matériaux thermoplastiques à souder (2,3), l'éprouvette étant un échantillon représentatif desdites pièces (2,3).

16. Système de soudage pour la mise en œuvre de l'évaluation d'un assemblage par soudage comprenant : une éprouvette selon la revendication 14 et une installation de soudage (1) ;
ladite installation de soudage (1) comprenant : un support pour porter l'éprouvette à souder ; au moins un élément de chauffe, configuré pour chauffer les pièces à souder (2,3) ; au moins un capteur de température, configuré pour mesurer les températures de surface et d'interface de l'éprouvette ; et
l'élément de chauffe et le capteur de température étant configurés pour se déplacer par rapport aux pièces à souder (2,3) lors du soudage, selon une direction de soudage D.

## Patentansprüche

1. Verfahren zum Bewerten einer Montage durch Schweißen von Teilen auf Grundlage von thermoplastischen Materialien und die jeweils zu schweißende und freie Oberflächen (2,3) aufweisen, umfassend:
- 1- Bereitstellen eines Prüflings, umfassend mindestens zwei Teile (20,30,40,50,60), die sich zumindest teilweise überlappen;
wobei mindestens eines der Teile ein perforiertes Referenzteil (20,30,50) ist, das mindestens eine Perforation in seiner Stärke umfasst;
- 2- Bereitstellen einer Schweißanlage (1), umfassend mindestens einem Heizelement und mindestens einen Temperatursensor;
- 3- Bereitstellen von Wärme durch das Heizelement;
- 4- Messen mindestens einer Innentemperatur des Prüflings durch den Temperatursensor auf Ebene der Perforation;
wobei sich das Heizelement und der Temperatursensor beim Schweißen (2,3) in Bezug auf die zu schweißenden Teile in einer Schweißrichtung D bewegen.

2. Verfahren nach Anspruch 1, wobei das Heizelement ein Einsatz (4) ist, wobei der Einsatz (4) zwischen die zu schweißenden Oberflächen der zwei zu schweißenden Teile (2,3) eingefügt wird.

3. Verfahren nach Anspruch 2, wobei der Einsatz (4) durch Induktion, durch Widerstandseffekt, durch Vibration, durch Reibung, durch Ultraschall oder unter Verwendung eines Lasers durch einen heißen Gasstrom oder durch Leitung von einer externen Wärmequelle erhitzt wird.

4. Verfahren nach einem der vorherigen Ansprüche, wobei die Perforation eine Perforation ist, die die Stärke des perforierten Referenzteils (20,30,50) ganz oder teilweise durchquert.

5. Verfahren nach einem der vorherigen Ansprüche, wobei die Perforation eine Perforation mit quadratischem Querschnitt (35), mit rechteckigem Querschnitt (36,37,38) oder mit kreisförmigem Querschnitt (24,34,51,511,512,513) ist.

6. Verfahren nach einem der vorherigen Ansprüche, wobei das perforierte Referenzteil (20, 30, 50) mindestens zwei senkrecht ausgerichtete Perforationen und/oder mindestens zwei parallel zu der Schweißrichtung D ausgerichtete Perforationen umfasst.

7. Verfahren nach einem der vorherigen Ansprüche, wobei das perforierte Referenzteil (20,30,50) mindestens einen ersten perforierten Abschnitt (21,31), einen zweiten nicht perforierten Abschnitt (22,32) und einen dritten perforierten Abschnitt (23,33) umfasst;
wobei die perforierten Abschnitte jeweils mindestens eine Perforation umfassen und den nicht perforierten Abschnitt einrahmen.

8. Verfahren nach einem der vorherigen Ansprüche, ferner umfassend das Messen von mindestens einer Temperatur der freien Oberfläche des perforierten Referenzteils (20,30,50).

9. Verfahren nach einem der vorherigen Ansprüche, wobei die Oberflächentemperatur und die Innentemperatur quer und/oder längs in Bezug auf die Schweißrichtung D gemessen werden.

10. Verfahren nach einem der vorherigen Ansprüche, ferner umfassend die Aufzeichnung von Temperaturwerten.

11. Verfahren nach einem der vorherigen Ansprüche, ferner umfassend den Vergleich der gemessenen Temperaturen mit Referenztemperaturen.

12. Verfahren nach einem der vorherigen Ansprüche, ferner umfassend einen Schritt zum Kalibrieren der Parameter des Schweißverbindungsverfahrens.

13. Montageverfahren durch Schweißen von mindestens einer Reihe von Teilen auf Grundlage von thermoplastischen Materialien, die geschweißt werden sollen und jeweils zu schweißende und freie Oberflächen (2,3) aufweisen, umfassend:
- 1- Bestimmen der Schweißparameter der zu schweißenden Teile (2,3) anhand der Bewertung der Montage durch Schweißen eines Prüflings, der eine repräsentative Probe bildet, nach den Ansprüchen 1 bis 12; und
- 2- Durchführen der Montage durch Schweißen der zu schweißenden Teile (2,3).

14. Prüfling zum Durchführen des Verfahrens zur Bewertung einer Montage durch Schweißen von Teilen auf Grundlage von thermoplastischen Materialien (2,3) nach einem der Ansprüche 1 bis 12, der Prüfling umfassend mindestens zwei Teile auf Grundlage von thermoplastischen Materialien, die zu schweißende Oberflächen, die mindestens teilweise einander gegenüberliegend angeordnet sind, und jeweilige freie Oberflächen (20,30,40,50,60) aufweisen, wobei mindestens eines der Teile ein perforiertes Referenzteil (20,30,50) ist, umfassend mindestens eine Perforation.

15. Verwendung des Prüflings nach Anspruch 14 zum Bewerten einer Montage durch Schweiß von Teilen auf Grundlage von zu schweißenden thermoplastischen Materialien (2,3), wobei der Prüfling eine repräsentative Probe der Teile (2,3) ist.

16. Schweißsystem zum Durchführen der Bewertung einer Montage durch Schweißen, umfassend: einen Prüfling nach Anspruch 14 und eine Schweißanlage (1);
die Schweißanlage (1) umfassend: ein Gestell zum Tragen des zu schweißenden Prüflings; mindestens ein Heizelement, das konfiguriert ist, um die zu schweißenden Teile (2,3) zu erhitzen; mindestens einen Temperatursensor, der konfiguriert ist, um die Oberflächen- und Schnittflächentemperaturen des Prüflings zu messen; und wobei das Heizelement und der Temperatursensor konfiguriert sind, um sich während des Schweißens in Bezug auf die zu schweißenden Teilen (2,3) in einer Schweißrichtung D zu bewegen.

## Claims

1. Method for evaluating an assembly by welding of parts made of thermoplastic materials and having respective surfaces to be welded and free surfaces (2, 3), comprising:
- 1- providing a test piece comprising at least two parts (20,30,40,50,60) that overlap at least in part;
wherein at least one of the parts is a perforated reference part (20,30,50) comprising at least one perforation in its thickness;
- 2- providing a welding installation (1) comprising at least one heating element and at least one temperature sensor;
- 3- providing heat by means of the heating element;
- 4- measuring at least one internal temperature of the test piece by means of the temperature sensor at the level of the perforation;
wherein the heating element and the temperature sensor move in a welding direction D relative to the parts to be welded during welding (2,3).

2. Method according to claim 1, wherein the heating element is an insert (4), wherein the insert (4) is inserted between the surfaces to be welded of the two parts to be welded (2,3).

3. Method according to claim 2, wherein the insert is heated by induction, by resistance, by friction, by ultrasound, or by using a laser through a hot gas stream, or by conduction from an external heat source.

4. Method according to any of the preceding claims, wherein the perforation is a perforation that traverses the all or part of the thickness of the perforated reference part (20, 30, 50).

5. Method according to any of the preceding claims, wherein the perforation is a perforation with a square (35), rectangular (36,37,38), or circular (24,34,51,511,512,513) cross-section.

6. Method according to any of the preceding claims, wherein the perforated reference part (20,30,50) comprises at least two perforations that are aligned perpendicular to, and/or at least two perforations that are aligned parallel to, the welding direction D.

7. Method according to any of the preceding claims, wherein the perforated reference part (20,30,50) comprises at least one first section that is perforated (21,31), one second section that is not perforated (22,32), and one third section that is perforated (23,33); wherein the perforated sections respectively comprise at least one perforation and frame the non-perforated section.

8. Method according to any of the preceding claims, further comprising measuring at least one temperature of the free surface of the perforated reference part (20,30,50).

9. Method according to any of the preceding claims, wherein the surface temperature and the internal temperature are measured transversely and/or longitudinally relative to the welding direction D.

10. Method according to any of the preceding claims, further comprising recording the temperature values.

11. Method according any of the preceding claims, further comprising comparing the temperatures measured with reference temperatures.

12. Method according to any of the preceding claims, further comprising a step of calibrating parameters of the method for assembly by welding.

13. Method of assembly by welding of at least one series of parts based on thermoplastic materials and having respective surfaces to be welded and free surfaces (2,3), comprising:
- 1- determining the settings for welding the parts to be welded (2,3) based on the evaluation of the assembly by welding of a test piece constituting a representative sample according to claims 1 to 12; and
- 2- carrying out the assembly of the parts to be welded (2,3) by welding.

14. Test piece for the implementation of the method for evaluating an assembly by welding of parts made of thermoplastic materials (2,3), according to any of claims 1 to 12, wherein the test piece comprises at least two parts based on thermoplastic materials having surfaces to be welded that are at least partially placed opposite one another and the respective free surfaces (20,30,40,50,60), wherein at least one of the parts is a perforated reference part (20,30,50) comprising at least one perforation.

15. Use of the test piece according to claim 14 to evaluate an assembly by welding of parts based on thermoplastic materials to be welded (2,3), wherein the test piece is a representative sample of these parts (2,3).

16. Welding system for the implementation of an evaluation of an assembly by welding comprising: a test piece according to claim 14 and a welding installation (1); said welding installation (1) comprising: a support for the test piece to be welded; at least one heating element, configured to heat the parts to be welded (2,3); at least one temperature sensor, configured to measure the surface and interface temperatures of the test piece; and the heating element and the temperature sensor being configured to move in a welding direction D relative to the parts to be welded (2,3) during welding.
